# EUROPEAN PATENT APPLICATION

(11) **EP 3 439 272 A1**
(43) Date of publication of application: **06.02.2019**
(21) Application number: 17184805.4
(22) Date of filing: 03.08.2017
(51) Int. Cl.: H04L 29/14, H04L 29/06, H04L 29/08

(54) **METHOD OF PROVIDING BACKUP FOR AN OPENSCAPEVOICE REGISTER CONFIGURATION**

(71) Applicant: Unify Patente GmbH & Co. KG, 80807 München (DE)
(72) Inventor: Biermayr, Rodrigo Kaminski, 80310-000 Curitiba (BR); Okuyama, Hélio, 80510-120 Curitiba - PR (BR)
(74) Representative: Fritzsche, Thomas

(57) **Abstract**

The present invention relates to a method of providing backup for an OpenScapeVoice (OSV) register configuration, with at least one OpenScapeBranch (OSB), the at least one OSB providing communications to Session Initiation Protocol (SIP) subscribers, and communicating on a main routing path, via a main Session Boarder Controller (SBC) configuration (SBC1, SBC2) with an OSV server on the basis of SIP protocol, the OSB maintaining a database in which SIP subscribers currently communicating are registered, the method comprising the following steps:
- copying the database to a redundancy SBC configuration (SBC3, SBC4) on the basis of the SIP protocol,
- establishing an alternative routing path for communication of the OSB via the redundancy SBC configuration (SBC3, SBC4) to the OSV server,
- continuing the providing of the communications of the SIP subscribers via the redundancy SBC configuration (SBC3, SBC4).

Further, the present invention also relates to a system for providing backup for an OSV register configuration, a non-transitory computer readable medium, and a terminal device.

## Description

The present invention concerns OpenScapeVoice (OSV) register configurations with redundancy (i.e., a main or primary network path, and an alternative path) for the Session Border Controller (SBC) connecting to OpenScapeBranches (OSB) at branch offices via different WAN providers. The SBCs are typically located at different enterprise network sub-domains.

In more detail, the present invention relates to a method of providing backup for an OpenScapeVoice (OSV) register, with at least one OpenScapeBranch (OSB), the at least one OSB providing communications to Session Initiation Protocol (SIP) subscribers, and communicating on a main routing path, via a main Session Boarder Controller (SBC) configuration (SBC1, SBC2) with an OSV server on the basis of SIP protocol, the OSB maintaining a database in which SIP subscribers currently communicating are registered. The OSV registers an SBC configuration (SBC1, SBC2). The registration database is located in the SBC configuration.

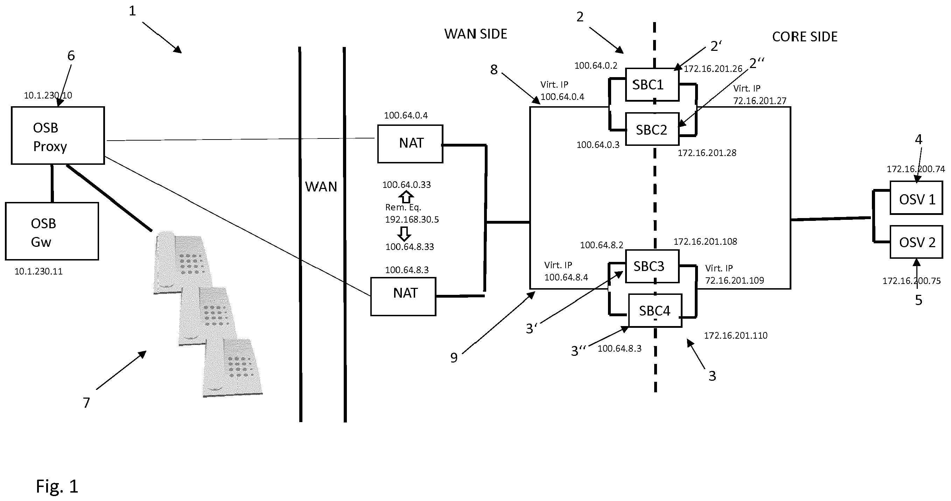

In the scenario illustrated in Fig. 1, two OS SBCs are provided in duplicated redundancy configurations (main or primary SBC 1, SBC2 and redundancy or secondary SBC 3, SBC4 pairs), two OSV servers (OSV 1, OSV 2) configured in a geo redundancy setup, and redundant network separated between access (WAN) and core (LAN) sides. This duplicated redundancy scenario serves an OSB which is responsible for providing access for both the SIP subscribers and gateways on a local side.

Herein, the main (or master) SBC configuration SBC1, SBC2 is adapted to store the registration data of current SIP subscribers stored during their connections, and their port contents in a database. This database is shared between SBC1 and SBC2 via the non-proprietary redundancy protocol. The main OSV (i.e., OSV 1) has the subscribers register configuration stored in its database and uses it for check and validation during the SIP registration process. The OSV's database comprises the main configuration (SBC 1, SBC2) registration database for the subscribers registered via OSB.

A problem occurs when the primary network path is broken, i.e., the SBC1, SBC2 configuration becomes inoperable. Reasons for that may be e.g., maintenance, system upgrade, link failure, hardware failure, power outage, disasters. Then, the alternative network path gets activated since neither the phones nor the OSV are aware of this situation. This leads to situations where the OSV or the phones at the branch are still trying to route calls via the primary path. As the re-registration period is typically 24 hours, the situation remains accordingly. Furthermore, double registrations of phones at the OSV occur.

In the scenario described before, this means that the main OSB becomes unavailable. Then, the OSB is forced to establish an alternative routing path for communication of the OSB via a redundancy SBC configuration (SBC3, SBC4) to the OSV server. Since the redundancy SBC configuration does not know the current subscribers database, calls will fail, and the subscribers will be forced to re-register again at OSV but via redundancy configuration (SBC3, SBC4). Besides that, registering with the new database will lead to duplicate registrations on both OSV redundancy pairs (i.e., OSV 1, and OSV 2).

Thus, an object of the present invention is to provide a method and system which at least partially alleviate the problems outlined above.

This object is solved by the method of providing backup for an OpenScapeVoice (OSV) configuration according to claim 1, a system for providing backup for an OpenScapeVoice (OSV) configuration according to claim 7, a non-transitory computer readable medium having the features according to claim 8, and a terminal device having the features according to claim 9. Preferred embodiments of the invention are defined in the respective dependent claims.

Accordingly, a method of providing backup for an OpenScapeVoice (OSV) register configuration is provided, with at least one OpenScapeBranch (OSB), the at least one OSB providing communications to Session Initiation Protocol (SIP) subscribers, and communicating on a main routing path, via a main Session Boarder Controller (SBC) configuration (SBC1, SBC2) with an OSV server on the basis of SIP protocol, the OSB maintaining a database in which SIP subscribers currently communicating are registered, the method comprising the following steps:
- copying the database to a redundancy SBC configuration (SBC3, SBC4) on the basis of the SIP protocol,
- establishing an alternative routing path for communication of the OSB via the redundancy SBC configuration (SBC3, SBC4) to the OSV server, and
- continuing the providing of the communications of the SIP subscribers via the redundancy SBC configuration (SBC3, SBC4).

According to a preferred embodiment, the method steps are performed upon non-availability of the main or primary SBC configuration.

Preferably, the step of copying is performed using at least one SIP OPTIONS message.

The redundancy SBC may send at least one SIP message to the main SBC, and upon receiving at least one SIP OPTIONS message from the secondary or redundancy SBC, may start an un-registration process of listed subscribers. Specifically, in the un-registration process registrations for the subscriber's contacts with expiration equal to zero are sent. These registrations would use the main SBC configuration SBC1, SBC2 virtual addresses and would remove the previous registrations.

According to another preferred embodiment, each of the SBC configurations, i.e., the main or primary and the redundancy or secondary SBC configurations, comprises a pair of two redundant SBCs, each of the pair of redundant SBCs synchronizing the respective SBCs.

According to still another preferred embodiment, the OSV is backed up by an additional OSV.

Further, according to the present invention, a system for providing backup for an OpenScapeVoice (OSV) configuration is provided, with at least one OpenScapeBranch (OSB), the at least one OSB being adapted for providing communications to Session Initiation Protocol (SIP) subscribers, and for communicating on a main routing path, via a main Session Boarder Controller (SBC) configuration (SBC1, SBC2) with an OSV server on the basis of SIP protocol, the OSB being adapted for maintaining a database in which SIP subscribers currently communicating are registered, the system being adapted for:
- copying the database to a redundancy SBC configuration (SBC3, SBC4) on the basis of the SIP protocol,
- establishing an alternative routing path for communication of the OSB via the redundancy SBC configuration (SBC3, SBC4) to the OSV server,
- continuing the providing of the communications of the SIP subscribers via the redundancy SBC configuration (SBC3, SBC4).

Accordingly, the inventive method and system use the native SIP protocol signaling flow to mirror the subscribers database from the main SBC configuration to the secondary OS SBC configuration. It also uses the SIP protocol to establish a direct connection between the two redundancy systems and trigger a process of registration synchronization for the OSV redundancy pair. i.e., SBC1, SBC2, and SBC3, SBC4.

Thus, the present invention proposes to leverage on the SIP message OPTIONS in order to convey the registration information captured at the SBC towards the OSB in a proprietary information container. This allows the OSB on switchover due to WAN connectivity problem detected by also using SIP OPTIONS messages between the OSB and the SBC as heard beat in order to forward the registration information to the redundant SBC. Based on this information, the redundant SBC on the one hand re-registers the phones at the OSV and, on the other hand, "un-registers" the phones at the primary SBC via the direct connectivity provided at the enterprise network. Thus, the call routing problems are resolved and the registration databases are in synchronization at the primary and the redundant SBC.

Thereby, the present invention creates a unique usage of synchronizing redundancy database information with the same signaling protocol (SIP) used for the peers. It also uses the SIP protocol body and its capabilities to relay private data on the same network and synchronize this data while it controls the current connections with the native SIP messages.

Further, the inventive method does not need any special further network configuration and can be used natively.

Besides that, the inventive concept can be used on other SIP messages not only in order to provide the database mirroring, but also to check and exercise a redundancy backup path and improve the reliability and availability in the whole redundancy configuration.

Moreover, the inventive method can be used not only for SIP registration databases, but for any database-like configuration, certificates, etc. Further, the inventive method can be used to transfer any information from the main SBC configuration to the redundancy SBC.

The invention and embodiments thereof are described in connection with the drawing.

Fig. 1 illustrates a network scenario in which the present invention can be applied.

The scenario 1 illustrated in Fig. 1 is composed of two OS SBCs (OpenScape SessionBorder Controller) 2, 3 in a duplicated redundancy configuration (SBC1,2 and SBC 3, 4 pairs) 2', 2", 3', 3", two OpenScapeVoice servers 4, 5 configured in a geo redundancy setup (OSV 1, OSV 2) and a redundant network separated between access (WAN) and core (LAN) sides. This duplicated redundancy scenario serves an OpenScapeBranch (OSB) which is responsible to provide the access for both SIP subscribers 7 and gateways on a local office.

The main master OS SBC (SBC1) indicated by reference numeral 2' is adapted to store the data registration of current SIP subscribers 7 along its connections and port contents. This database (DB) is shared with its backup OS SBC (SBC2) indicated by reference numeral 2" via a non-proprietary redundancy protocol. The main OSV 4 (OSV1) has the subscribers register configuration stored in its database and uses it for checking and validation during the SIP registration process.

When the main routing path 8 with the OS SBC redundancy pair (SBC 1, 2) 2', 2" becomes unavailable, the OSB uses the alternative routing path 9 with the secondary OS SBC redundancy pair (SBC 3, SBC4) indicated by reference numerals 3', 3". Since the secondary pair 3', 3" does not know the current subscribers database, calls will fail and the subscribers 7 will be forced to re-register again. Besides this problem, there will be duplicated registrations on both OSV redundancy pairs (OSV 1, OSV 2) which will cause a dynamic problem and routing issues.

The method according to an embodiment of the present invention uses the native SIP protocol signaling flow to mirror the subscribers database from the main OS SBC redundancy configuration 2', 2" (pair SBC1, SBC2) to the secondary OS SBC redundancy configuration 3', 3" (pair SBC3, SBC4). Specifically, it uses the existent flow for the OPTIONS and 200 OK messages, and the SIP protocol by the SIP headers and MIME body to transport the data of the database. In addition, a new SIP flow for the re-register from SBC 3, 4 to the OSVs is used. It also uses the same SIP process to establish a direct connection between the two redundancy systems and triggers a process of re-registration synchronization for the OSV redundancy pair 4, 5 (OSV1, OSV2) in case of a network failover.

In this embodiment of the invention, the inventive method is implemented using the SIP OPTIONS messages which are already used to check the availability of the SBCs and OSVs paths. If no response (200 OK) is received by the OSB from SBC 1, 2, it will switch to the SBC 3, 4 path. Herein, the MIME body of the message is used to transport the data needed to rebuild the registration database. It will be used to trigger the OS SBCs internally to send new REGISTER messages either to re-register or to un-register these subscribers 7 on the OSV redundancy pair.

OSB 6 adds a specific "request for registration database" header in the SIP OPTIONS message to the main OS SBC indicated by reference numeral 2'. The SBC1 2' uses this header to collect the current registration database (via a parsing script, for example), and sends it in the body contents of the OPTIONS' 200OK. The registration contains the contacts, expiration time, and all other registration data of each subscriber 7. OSB 6 stores this database and on an outage, i.e., when no response for the SIP OPTIONS message to the SBC1 and SBC2 is received, it attaches it to the SIP OPTIONS message(s) for the secondary OS SBC (SBC3), indicated by reference numeral 3'.

This system, i.e., the redundancy configuration SBC3, SBC4 copies this registration database during the SIP parsing process from the initial SIP OPTIONS message from the OSB 6. At the end of this process, it sends a series of REGISTER messages (via a script, for instance) to re-register the messages to the OSV 4, 5, and it forwards the same OPTIONS message(s) to the main SBC configuration 2 (SBC 1, SBC2) to "un-register" the same database. This creates a direct main SBC configuration 2 ↔ secondary SBC configuration 3 communication in the core side without going through the OSVs 4, 5.

By doing this with every SIP OPTIONS message(s), the OSB 6 will be in synchronization with the latest registration database status and will allow to reconstruct the whole registration path in case of network failures.

When the main OS SBC configuration 2 recovers its network connection, the same mechanism may be used to restore the registration path and re-synchronize the registration database.

In the embodiment of Fig. 1, initially, all SIP signaling messages go from the OSB 6 to the SBC on the main SBC configuration 2 (virtual IP address: 100.64.0.4).

In more detail, the method of this embodiment of the invention comprises the following steps:
The OSB 6 uses the SIP OPTIONS messages (according to the SIP protocol) to retrieve and store the last registration status with the list of registered subscribers 7.

Upon a network outage or any other connection with the main SBC configuration 2 at 100.64.0.4, the OSB 6 copies the registration database into the SIP OPTIONS message and sends it to the SBC3, indicated by reference numeral 3', on the secondary SBC configuration 3 (at virtual IP address: 100.64.8.4).

The secondary SBC configuration 3 will store the new registration database into its file directory. It will also send a SIP OPTIONS message to the main SBC configuration 2 with the same registration content.

Upon receiving the SIP OPTIONS message with registration content in the core side, the main SBC configuration 2 will start a un-registration process on the listed subscribers 7.

Finally, the secondary SBC configuration 3 will start a re-registration process of all listed subscribers 7. This step could also be performed based on the main SBC configuration 2 response.

At this point, both the secondary or redundancy SBC configuration 3, indicated by reference numerals 3' (for SBC3) and 3" (for SBC4)', and the OSV 4, 5 pairs are synchronized with the registration database and shall be able to operate the new registrations and SIP calls.

The same process may be used when the connection with the main OS SBC pair 2', 2" is restored on the OSB 6 side.

### List of reference numerals

- 1: OSV scenario/configuration
- 2: main OS SBC configuration
- 2', 2": OS SBC redundancy pair SBC1, SBC2
- 3: secondary OS SBC configuration
- 3', 3": OS SBC redundancy pair SBC3, SBC4
- 4: OSV
- 5: additional OSV
- 6: OSB
- 7: subscribers
- 8: main routing path
- 9: alternative routing path

## Claims

1. Method of providing backup for an Open Scape Voice (OSV) register configuration, with at least one OpenScapeBranch (OSB) (6), the at least one OSB (6) providing communications to Session Initiation Protocol (SIP) subscribers (7), and communicating on a main routing path (8), via a main Session Boarder Controller (SBC) configuration (SBC1, SBC2) (2) with an OSV server (4) on the basis of SIP protocol, the OSB (6) maintaining a database located in the Session Boarder Controller (SBC) configuration (SBC1, SBC2), in which database SIP subscribers (7) currently communicating are registered, the method comprising the following steps:
- copying the database to a redundancy SBC configuration (SBC3, SBC4) (3) on the basis of the SIP protocol,
- establishing an alternative routing path (9) for communication of the OSB (6) via the redundancy SBC configuration (SBC3, SBC4) (3) to the OSV server (4),
- continuing the providing of the communications of the SIP subscribers (7) via the redundancy SBC configuration (SBC3, SBC4) (3).

2. Method according to claim 1, wherein the method steps are performed upon non-availability of the main SBC configuration (2).

3. Method according to claim 1 or 2, wherein the step of copying is performed using at least one SIP OPTIONS message.

4. Method according to any one of the preceding claims, wherein the redundancy SBC configuration (3) sends at least one SIP message to the main SBC configuration (2), and upon receiving at least one SIP OPTIONS message from the redundancy SBC configuration (3), starts an un-registration process of listed subscribers (7)

5. Method according to any one of the preceding claims, wherein each of the SBC configurations (2, 3) comprises a pair of two redundant SBCs (SBC1, SBC2; SBC3, SBC4) (2', 2", 3', 3"), each of the pair of redundant SBCs (SBC1, SBC2; SBC3, SBC4) (2', 2", 3', 3") synchronizing the respective SBCs (SBC1, SBC2; SBC3, SBC4) (2', 2", 3', 3").

6. Method according to any one of the preceding claims, wherein the OSV (4) is backed-up by an additional OSV (5).

7. System for providing backup for an OpenScapeVoice (OSV) configuration, with at least one OpenScapeBranch (OSB) (6), the at least one OSB (6) being adapted for providing communications to Session Initiation Protocol (SIP) subscribers (7), and for communicating on a main routing path (8), via a main Session Boarder Controller (SBC) configuration (SBC1, SBC2) (2) with an OSV server (4) on the basis of SIP protocol, the OSB (6) being adapted for maintaining a database located in the Session Boarder Controller (SBC) configuration (SBC1, SBC2), in which database SIP subscribers (7) currently communicating are registered, the system being adapted for:
- copying the database to a redundancy SBC configuration (SBC3, SBC4) (3) on the basis of the SIP protocol,
- establishing an alternative routing path (9) for communication of the OSB (6) via the redundancy SBC configuration (SBC3, SBC4) (3) to the OSV server (4),
continuing of the providing the communications of the SIP subscribers (7) via the redundancy SBC configuration (SBC3, SBC4) (4).

8. Non-transitory computer readable medium having at least one application stored thereon which, when executed by a processor unit, causes the system for providing backup according to claim 7 to carry out the method of any of the claims 1 to 6.

9. Terminal device, the terminal device comprising non-transitory memory communicatively connected to a processor unit, the memory having an application that defines a method according to any one of claims 1 to 6 performed by the terminal device when the application is run by the processor unit.
